# EUROPÄISCHE PATENTANMELDUNG

(11) **EP 1 555 153 A2**
(43) Veröffentlichungstag der Anmeldung: **20.07.2005**
(21) Anmeldenummer: 04027824.4
(22) Anmeldetag: 24.11.2004
(51) Int. Cl.: B60J 10/08

(54) **Portalabdichtung für Türen an Fahrzeugen des öffentlichen Personen-Nah- und Fernverkehrs**

(30) Priorität: 05.12.2003 DE 20318900 U
(71) Anmelder: Gebrüder Bode GmbH & Co.KG, 34123 Kassel (DE)
(72) Erfinder: Sprenger, Thorsten, 34253 Lohfelden (DE)
(74) Vertreter: Feder, Wolf-D., Dr.

(57) **Zusammenfassung**

Eine Portalabdichtung für Türen an Fahrzeugen des öffentlichen Personen-Nah- und Fernverkehrs mit einem am Türrahmen (1) fest angeordneten, als Profilschiene ausgebildeten Kern (2) aus hartem Material, der an seinem nach außen weisenden Ende ein Kopfstück (2.1) mit im wesentlichen T-förmigem Querschnitt aufweist, das von einem Dichtungsstreifen (3) aus gummielastischem Material umhüllt ist, der mindestens an seiner der Dichtungsfläche des Türflügels zugewandten Seite mit einer sich mindestens im geschlossenen Zustand der Tür an die Dichtungsfläche anlegenden Dichtungslippe (3.1) verbunden ist. Der Dichtungsstreifen (3) weist im Bereich unmittelbar hinter der Dichtungslippe (3.1) einen in seiner Längsrichtung verlaufenden Hohlraum (4) auf, der mit einer Substanz gefüllt ist, mit deren Hilfe bei seiner Zusammenpressung aufgrund des sich anlegenden Türflügels (5) die kinetische Energie in andere Energieformen, insbesondere Wärmeenergie, umgewandelt wird.

## Beschreibung

Die Erfindung betrifft eine Portalabdichtung für Türen an Fahrzeugen des öffentlichen Personen-Nah- und -Fernverkehrs mit den Merkmalen aus dem Oberbegriff des Patentanspruchs 1.

Bei derartigen Portalabdichtungen besteht das Problem, dass der Türflügel bei der Schließ- und Öffnungsbewegung mit relativ hoher Geschwindigkeit in die Endlage einfährt und beim Auftreffen auf den Dichtungsstreifen der Portalabdichtung unangenehme Geräusche entstehen.

Der Erfindung liegt die Aufgabe zugrunde, eine Portalabdichtung mit den im Oberbegriff des Patentanspruchs 1 angegebenen Merkmalen so zu gestalten, dass die beim Auftreffen des Türflügels auftretenden Geräusche stark minimiert werden.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, den Dichtungsstreifen in seinem Innenraum so auszubilden, dass beim Auftreffen des Türflügels auf den Dichtungsstreifen die kinetische Energie des Türflügels weitgehend in andere Energieformen, insbesondere Wärmeenergie, umgewandelt wird. Dies geschieht, indem innerhalb des Dichtungsstreifens in den Bereichen, auf welche der Türflügel bei der Schließ- und/oder Öffnungsbewegung auftrifft, ein Hohlraum vorgesehen wird, der mit einer Substanz gefüllt ist, die diese Umwandlung der kinetischen Energie in andere Energieformen ermöglicht. Diese Substanz kann wie der Dichtungsstreifen selbst aus einem gummielastischen Material bestehen, das aber eine deutlich geringere Dichte oder Härte aufweist als das Material des Dichtungsstreifens. Bei einem vorteilhaften Ausführungsbeispiel der erfindungsgemäßen Portalabdichtung besteht die Substanz in einem Leichtgummi, beispielsweise Moosgummi, es kann aber auch ein entsprechend eingestellter Kunststoffschaum verwendet werden.

Schließlich ist es auch möglich, den Hohlraum mit Luft zu füllen, wobei der Hohlraum als geschlossener Hohlraum ausgebildet sein kann, in dem die kinetische Energie des Türflügels durch die Kompression der Luft in Wärme umgewandelt wird, er kann aber auch als offener Hohlraum ausgebildet sein, und in diesem Falle wird die kinetische Energie des Türflügels teils durch Komprimieren der Luft in Wärme und teils durch die ausströmende Luft in kinetische Energie verwandelt, wodurch dieser Anteil durch entsprechende Bemessung des Strömungsquerschnitts für die ausströmende Luft einstellbar ist.

Bei der erfindungsgemäßen Portalabdichtung kann der Hohlraum im Dichtungsstreifen derart angeordnet sein, dass sich insbesondere bei der Anwendung an Innenschwenktüren der Türflügel sowohl zum Abschluss der Schließbewegung als auch zum Abschluss der Öffnungsbewegung mit einer Dichtungsfläche an den Dichtungs streifen anlegt, so dass in beiden Fällen eine Geräuschdämpfung eintritt.

Im folgenden wird anhand der beigefügten Zeichnungen ein Ausführungsbeispiel für eine Portalabdichtung nach der Erfindung näher erläutert.

In den Zeichnungen zeigen:
Fig. 1 einen Schnitt durch eine an einem Türrahmen befestigte Portalabdichtung;
Fig. 2 und 3 in gegenüber Fig. 1 verkleinerter Darstellung die Portalabdichtung nach Fig. 1 in Anwendung bei einer Innenschwenktür im geschlossenen Zustand der Tür;
Fig. 3 in einer Darstellung analog Fig. 2 die Portalabdichtung bei geöffneter Tür.

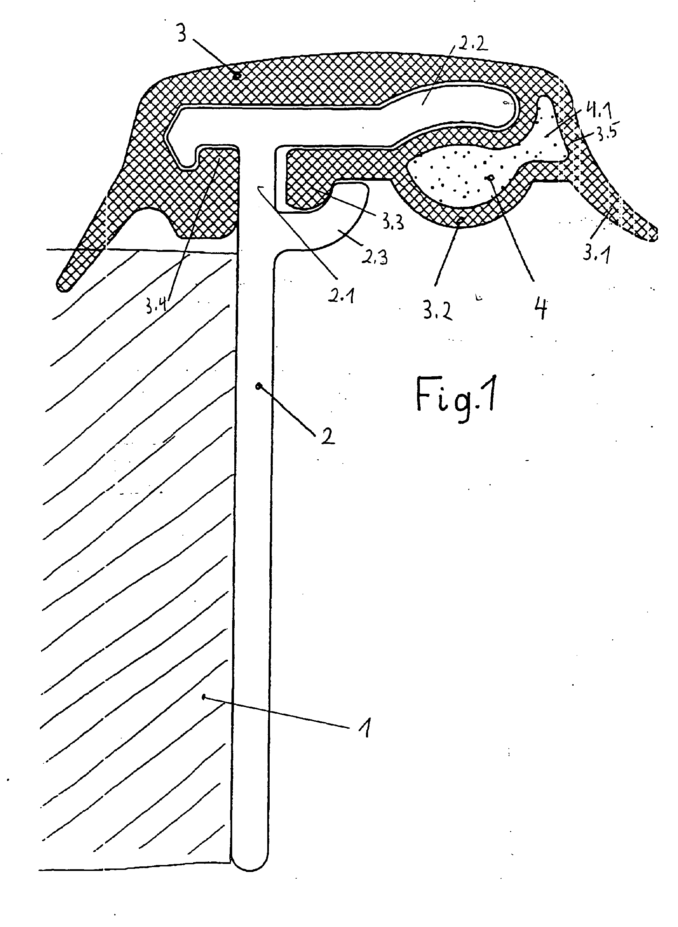

Die in den Fig. 1 bis 3 dargestellte Portalabdichtung besitzt einen als Profilschiene ausgebildeten Kern 2, welcher fest am Türrahmen 1 des Fahrzeugportals angeordnet, also beispielsweise geschraubt, geklebt etc. ist. Der Kern 2 besitzt ein Kopfstück 2.1 mit im wesentlichen T-förmigem Querschnitt und einem Querbalken 2.2 sowie einer Befestigungshakenleiste 2.3. Der Kern besteht aus einem harten Material, beispielsweise aus Metall. Das Kopfstück ist mit einem Dichtungsstreifen 3 aus gummielastischem Material umhüllt, der so ausgebildet ist, dass er mit einer Randleiste 3.3 hinter die Hakenleiste 2.3 eingreift und mit einer weiteren Randleiste 3.4 hinter einen hakenartigen Fortsatz des Querbalkens 2.2.

Der in Richtung auf den in Fig. 1 nicht dargestellten Türflügel weisende Rand des Dichtungsstreifens 3 ist mit einer Dichtungslippe 3.1 versehen, an den sich im geschlossenen und geöffneten Zustand der Türflügel 5 mit einer Dichtungsfläche 5.1 bzw. 5.2 anlegen kann.

Im Bereich unmittelbar hinter der Dichtungslippe 3.1 weist der Innenraum des Dichtungsstreifens 3 einen in seiner Längsrichtung verlaufenden Hohlraum 4 auf, der im dargestellten Ausführungsbeispiel mit einem gummielastischen Material gefüllt ist, das eine geringere Dichte und Härte aufweist als das Material des Dichtungsstreifens 3. Hier kann ein Leichtgummi, beispielsweise Moosgummi, verwendet werden. Die Außenwand des Hohlraums 4 besteht aus dem härteren, gummielastischen Material des Dichtungsstreifens 3.

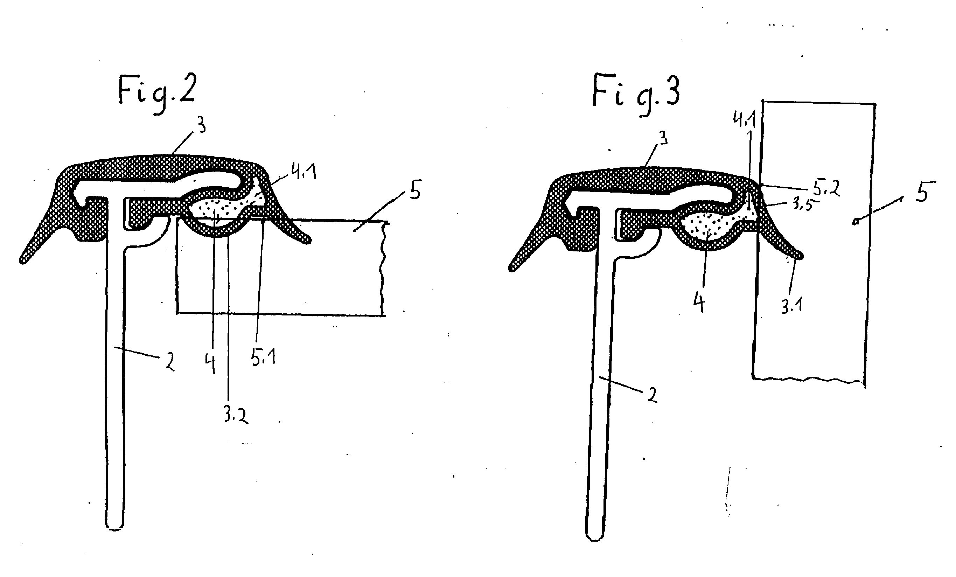

Die Wirkungsweise der Portalabdichtung nach Fig. 1 ist aus den Fig. 2 und 3 abzulesen, in denen lediglich die Portalabdichtung selbst ohne Türrahmen und in stark schematisierter Darstellung in Fig. 2 der Türflügel 5 in geschlossener Stellung und Fig. 3 der Türflügel 5 in geöffneter Stellung dargestellt ist. In den Darstellungen nach Fig. 2 und 3 sind die beim Anliegen des Türflügels 5 am Dichtungsstreifen 3 auftretenden Verformungen nicht dargestellt, sondern in beiden Darstellungen besitzt der Dichtungsstreifen 3 die gleiche Gestalt wie in Fig. 1, wenn kein Türflügel anliegt.

Aus Fig. 2 ist abzulesen, dass, wenn sich im geschlossenen Zustand der Tür die Dichtungsfläche 5.1 des Türflügels 5 an den Dichtungsstreifen 3 im Bereich der Außenwand 3.2 des Hohlraums 4 anlegt, der Inhalt des Hohlraums 4, also beispielsweise der Moosgummi, komprimiert wird. Hierdurch wird eine Dämpfung der Auftreffbewegung des Türflügels 5 beim Schließen der Tür erreicht, indem die auftretende kinetische Energie im wesentlichen in Wärme umgesetzt wird.

Am Ende der Öffnungsbewegung nimmt der Türflügel 5 eine Stellung ein, wie sie in Fig. 3 dargestellt ist, d.h. er legt sich mit einer Dichtungsfläche 5.2 an die Außenwand 3.5 eines Abschnitts 4.1 des Hohlraums 4 an, der im Dichtungsstreifen 3 in den Bereich hineingeführt ist, an dem die Dichtungslippe 3.1 ansetzt und an den sich die Dichtungsfläche 5.2 des Türflügels 5 bei Abschluss der Öffnungsbewegung anlegt. Es ist zu erkennen, dass hierdurch der Teilraum 4.1 und von ihm ausgehend der ganze Hohlraum 4 ebenfalls komprimiert wird und hierdurch ebenfalls eine Dämpfung der Auftreffbewegung des Türflügels 5 erreicht wird.

Es sind außer der in den Fig. 1 bis 3 dargestellten Ausführungsform einer Portalabdichtung auch andere, nicht dargestellte Ausführungsformen möglich, bei denen der Hohlraum 4 nicht mit einem Feststoff, sondern mit Luft gefüllt ist. Auch in diesem Falle ist jeweils eine Abdämpfung der Auftreffbewegung des Türflügels 5 auf dem Dichtungsstreifen 3 zu erreichen. Dabei kann der Hohlraum 4 als geschlossener Hohlraum ausgebildet sein, so dass die Umwandlung der kinetischen Energie des Türflügels 5 im wesentlichen durch Komprimierung der im Hohlraum 4 enthaltenen Luft und entsprechende Wärmeerzeugung erreicht wird. Der Hohlraum 4 kann aber auch als offener, mit Luft gefüllter Hohlraum ausgebildet sein, aus dem die Luft beim Auftreffen des Türflügels 5 und entsprechendem Eindrücken der Außenwände 3.2 bzw. 3.5 des Hohlraums herausgedrückt wird und nach dem Abheben des Türflügels 5 durch die auftretenden Rückstellkräfte wieder hineingezogen wird. Hierbei kann es zweckmäßig sein, wenn der Hohlraum 4 mit dem Außenraum über eine oder mehrere Öffnungen verbunden ist, deren Strömungsquerschnitt kleiner ist als der Querschnitt des Hohlraums selbst.

## Patentansprüche

1. Portalabdichtung für Türen an Fahrzeugen des öffentlichen Personen-Nah- und -Fernverkehrs mit einem am Türrahmen fest angeordneten, als Profilschiene ausgebildeten Kern aus hartem Material, der an seinem nach außen weisenden Ende ein Kopfstück mit im wesentlichen T-förmigem Querschnitt aufweist, das von einem Dichtungsstreifen aus gummielastischem Material umhüllt ist, der mindestens an seiner der Dichtungsfläche des Türflügels zugewandten Seite mit einer sich mindestens im geschlossenen Zustand der Tür an die Dichtungsfläche anlegenden Dichtungslippe verbunden ist, **dadurch gekennzeichnet, dass** der Dichtungsstreifen (3) im Bereich unmittelbar hinter der Dichtungslippe (3.1) einen in seiner Längsrichtung verlaufenden Hohlraum (4) aufweist, der mit einer Substanz gefüllt ist, mit deren Hilfe bei seiner Zusammenpressung aufgrund des sich anlegenden Türflügels (5) die kinetische Energie in andere Energieformen, insbesondere Wärmeenergie, umgewandelt wird.

2. Portalabdichtung nach Anspruch 1, **dadurch gekennzeichnet, dass** der Hohlraum (4) mit einem gummielastischen Material gefüllt ist, das eine geringere Dichte und/oder Härte aufweist als das Material des Dichtungsstreifens (3).

3. Portalabdichtung nach Anspruch 2, **dadurch gekennzeichnet, dass** der Hohlraum (4) mit einem Leichtgummi, beispielsweise Moosgummi, ausgefüllt ist.

4. Portalabdichtung nach Anspruch 2, **dadurch gekennzeichnet, dass** der Hohlraum (4) mit einem Kunststoffschaum ausgefüllt ist.

5. Portalabdichtung nach Anspruch 1, **dadurch gekennzeichnet, dass** der Hohlraum (4) als geschlossener, mit Luft gefüllter Hohlraum ausgebildet ist.

6. Portalabdichtung nach Anspruch 1, **dadurch gekennzeichnet, dass** der Hohlraum (4) als offener, mit Luft gefüllter Hohlraum ausgebildet ist.

7. Portalabdichtung nach Anspruch 6, **dadurch gekennzeichnet, dass** der Hohlraum (4) über mindestens eine Öffnung mit dem Außenraum verbunden ist, deren Strömungsquerschnitt kleiner ist als der Querschnitt des Hohlraums.

8. Portalabdichtung nach einem der Ansprüche 1 bis 7, insbesondere zur Anwendung an Innenschwenktüren, **dadurch gekennzeichnet, dass** der Hohlraum (4) derart innerhalb des Dichtungsstreifens (3) angeordnet ist, dass sich der Türflügel (5) sowohl zum Abschluss der Schließbewegung als auch zum Abschluss der Öffnungsbewegung mit einer Dichtungsfläche (5.1, 5.2) an den Dichtungsstreifen derart anlegt, dass eine Verformung des Hohlraums (4, 4.1) bewirkt wird.
